# EUROPÄISCHE PATENTANMELDUNG

(11) **EP 0 803 541 A1**
(43) Veröffentlichungstag der Anmeldung: **29.10.1997**
(21) Anmeldenummer: 97106422.5
(22) Anmeldetag: 18.04.1997
(51) Int. Cl.: C08L 83/04, C09J 183/04, C09K 3/10

(54) **Adhäsive RTV-Siliconkautschukmischungen**

(30) Priorität: 26.04.1996 DE 19616789
(71) Anmelder: Hüls Silicone Gesellschaft mit beschränkter Haftung, D-01610 Nünchritz (DE)
(72) Erfinder: Schöley, Peter, 01612 Nünchritz (DE); Liesch, Gisela, 01587 Riesa (DE); Sczepanski, Cornelia, 01612 Nünchritz (DE); Michel, Ulrich, Dr., 53757 Sankt Augustin (DE)
(74) Vertreter: Zöllner, Gudrun

(57) **Zusammenfassung**

Die Erfindung betrifft adhäsive RTV-Siliconkautschukmischungen auf der Basis von durch Kondensation vernetzenden Polydiorganosiloxanen, welche neben den üblichen Bestandteilen die Kombination von mindestens einem hydrolysierbaren Alkylsilan und mindestens einem verzweigten Polysiloxan enthalten.

## Beschreibung

Die Erfindung betrifft adhäsive RTV-Siliconkautschukmischungen auf der Basis von durch Kondensation vernetzenden Polydiorganosiloxanen, welche neben den üblichen Bestandteilen die Kombination von mindestens einem hydrolysierbaren Alkylsilan und mindestens einem verzweigten Polysiloxan enthalten.

Bei Raumtemperatur zu Elastomeren vernetzende Siliconkautschukmischungen sind bekannt. Sie enthalten im allgemeinen ein vernetzbares polymeres, meist lineares Siloxan, eine vernetzend wirkende Verbindung, einen Katalysator und ggf. weitere Zusätze wie Weichmacher, Haftvermittler, Pigmente, Verarbeitungshilfsmittel und Füllstoffe.

Die sehr guten abhäsiven Eigenschaften der Siliconkautschuke sind nicht immer von Vorteil, da oft eine feste Haftung des Silicons auf verschiedenen Untergründen erreicht werden soll. Deshalb bedient man sich sogenannter Haftvermittler, die entweder in die Siliconkautschukmischung eingearbeitet oder als Grundierung auf den Untergrund aufgetragen werden. Üblicherweise bestehen diese Haftvermittler aus einem oder mehreren monomeren Silanen, die über Kohlenstoff an Silicium gebundene funktionelle Gruppen aufweisen. Bekannt sind auch haftvermittelnd wirkende Verbindungen, die durch Umsetzung unterschiedlicher Haftvermittler erhalten werden.

Technisch bevorzugt ist das Einarbeiten der Haftvermittler in die Siliconkautschukmischungen, wodurch der zusätzliche Arbeitsgang des Haftvermittlerauftrages eingespart wird. Ein wesentliches Problem für die Stabilität der Haftfestigkeit solcher Verklebungen oder Abdichtungen besteht jedoch darin, daß einerseits die Haftung des Silicons auf dem Untergrund und andererseits die Vulkanisatfestigkeit, beispielsweise bei erhöhten Temperaturen und unter gleichzeitiger Einwirkung von Feuchtigkeit, sehr schnell nachläßt. Das führt innerhalb kurzer Zeit zu einer erheblichen Reduzierung des technischen Gebrauchswertes des Verbundes Silicon/Untergrund.

Gemäß DE 23 01 547 wird für eine Verklebung von Silicon mit Glas eine Kombination aus Aminopropyltriethoxysilan und Glycidoxypropyltrimethoxysilan bzw. analoger Alkoxysilane mit Amino- und Epoxid-Gruppen eingesetzt. EP 178 751 beschreibt die Einarbeitung dieser Verbindungen in die Siliconkautschukmischung. Diese Systeme haben den Nachteil, daß es bei Zugbeanspruchung einer solchen Verklebung nach gleichzeitiger Belastung durch Temperatur und Feuchtigkeit (Heißwasserlagerung) zum Adhäsionsriß kommt.

Es ist auf verschiedene Weise versucht worden, diesen Festigkeitsabfall zu vermeiden. So wird in EP 540 540 der Zusatz von Kollophoniumestern in Form von toluolischen Lösungen beschrieben. JP 3 017 158 lehrt die Verwendung von mit Kollophonium beschichteten Kreiden, womit eine zusätzliche Füllstoffbehandlung erforderlich wird.

Aufgabe der Erfindung war es daher, adhäsive, bei Raumtemperatur vernetzende Siliconkautschukmischungen bereitzustellen, die sowohl eine hohe Frühbelastbarkeit des verklebten Gefüges (ausreichende Adhäsions- und Kohäsionskräfte nach wenigen Stunden Vernetzung) als auch eine ausgezeichnete Heißwasserstabilität der Verklebungen gewährleisten.

Die adhäsiven RTV-Siliconkautschukmischungen auf der Basis von durch Kondensation vernetzenden Polydiorganosiloxanen enthalten erfindungsgemäß
(a) mindestens eine siliciumorganische Verbindung der allgemeinen Formel

   RₐR¹_{b}SiX_{4-(a+b)} (I),

   worin R unabhängig voneinander, substituierte und/oder unsubstituierte, gesättigte und/oder ungesättigte, einwertige Kohlenwasserstoffreste mit 1 bis 10 Kohlenstoffatomen, R¹ unabhängig voneinander, substituierte und/oder unsubstituierte, gesättigte und/oder ungesättigte lineare, verzweigte und/oder cyclische Kohlenwasserstoffreste mit mindestens drei Kohlenstoffatomen darstellen, X eine hydrolysierbare Gruppe bedeutet, a Werte von 0 bis 2 und die Summe (a+b) Werte von 1 bis 3 annehmen, und/oder deren Teilkondensate und
(b) mindestens eine siliciumorganische Verbindung der allgemeinen Formel

   (SiO_{4/2})ₓ(R³SiO_{3/2})_{y}(R³₂SiO_{2/2})_{z}(R³₃SiO_{1/2})_{w} (II),

   worin R³ unabhängig voneinander R und/oder OR und/oder OH bedeutet und die Summe (x+y+z+w) Werte größer 2 annimmt, und/oder
(c) das durch Umsetzung von mindestens einer Verbindung der allgemeinen Formel (I) mit mindestens einer Verbindung der allgemeinen Formel (II) erhaltene Produkt.

Üblicherweise sind 0,1 Gew.-% bis 30 Gew.-% der Verbindung (a) und (b) und/oder (c), bezogen auf die Gesamtmischung, enthalten. Bevorzugt wird eine Kombination von 1,0 bis 3,5 Gew.-% (a) und 1,5 bis 4,0 Gew.-% (b) oder 1,0 bis 5,0 Gew.-%, bezogen auf die Gesamtmischung, verwendet.

Die siliciumorganischen Verbindungen der allgemeinen Formel (I) weisen beispielsweise als Reste R¹ Octyl-, Cyclohexenyl- und/oder Isobutylreste auf, aber auch andere Alkylreste, die linear, verzweigt oder cyclisch sein können sowie Alkenyl-, Allyl-, Cycloalkyl- bzw. -alkenyl-, Aryl-, Alkylaryl- oder Arylalkylreste, substituiert oder unsubstituiert, können gebunden sein. Bevorzugt werden Verbindungen der allgemeinen Struktur R¹Si(OR⁴)₃', eingesetzt, wobei R⁴ Kohlenwasserstoffreste mit 1 bis 4 Kohlenstoffatomen darstellt. Beispiele dafür sind Octyltriethoxysilan, Iso-Butyltrimethoxysilan oder Cyclohexenylethyltriethoxysilan.

Die siliciumorganischen Verbindungen der allgemeinen Formel (II) sind nieder- bis hochmolekulare verzweigte Polysiloxane. Sie bestehen bevorzugt aus Einheiten der Struktur (R³SiO_{3/2}) (T-Einheiten) und aus Einheiten der Struktur (R³₂SiO_{2/2}) (D-Einheiten), wobei in der allgemeinen Formel (II) x und w gleich 0 sind sowie y vorzugsweise Werte zwischen 2 und 100 und z Werte zwischen 0 und 80 annehmen, oder aus Einheiten der Struktur (R³₃SiO_{1/2}) (M-Einheiten), (SiO_{4/2}) (Q-Einheiten) und (R³₂SiO_{2/2}) (D-Einheiten), wobei in der allgemeinen Formel (II) y gleich 0 ist, x Werte zwischen 2 und 100, z Werte zwischen 0 und 50 und w Werte zwischen 1 und 200 annehmen. Bevorzugte Reste R³ sind Phenyl-, Methyl-, Ethyl- oder Vinylreste.

Die eingesetzten Polysiloxane können auf verschiedene Weise in die Siliconkautschukmischung eingebracht werden, beispielsweise in reiner Form entweder flüssig oder fest, aber auch gelöst in einem organischen Lösemittel oder in einer der eingesetzten Verbindungen der allgemeinen Formel (I), vorzugsweise in einem Organotrialkoxysilan.

Weiterhin ist es möglich, ein Umsetzungsprodukt von der siliciumorganischen Verbindung der allgemeinen Formel (I) mit der siliciumorganischen Verbindung der allgemeinen Formel (II), hergestellt in Gegenwart eines Katalysators, einzusetzen. Als Katalysator wird dabei vorteilhafterweise derjenige verwendet, der auch als Vernetzungskatalysator in der Siliconkautschukmischung eingesetzt wird, üblicherweise eine organische Metall- oder Stickstoffverbindung.

RTV-Siliconkautschukmischungen enthalten als übliche Bestandteile:
(i) 30 bis 90 Gew.-% mindestens eines durch Kondensation vernetzbaren Polydiorganosiloxanes der allgemeinen Formel 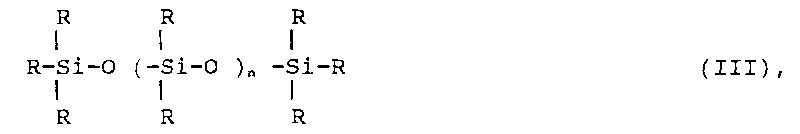 worin R die o. a. Bedeutung hat oder OR oder OH mit der Maßgabe darstellt, daß durchschnittlich mindestens ein hydrolysierbarer
   Reste pro Molekül gebunden ist, und n einen Wert zwischen 5 und 50.000 annimmt,
(k) 1 bis 10 Gew.-% mindestens eines Vernetzers der allgemeinen Formel

   RₐR⁵_{b}SiX_{4-(a+b)} (IV),

   worin R die o. a. Bedeutung hat, R⁵ Kohlenwasserstoffreste mit 1 bis 6 Kohlenwasserstoffen und X eine hydrolysierbare Gruppe darstellt und a die o. a. Werte annimmt, und/oder deren Teilkondensate,
(l) 0,02 bis 5 Gew.-% mindestens eines Haftvermittlers der allgemeinen Formel

   R¹_{c}R⁶_{d}SiOR¹_{4-(c+d)} (V),

   worin R¹ die oben angegebene Bedeutung hat, R⁶ mindestens einen Si-C-gebundenen Rest einer haftvermittelnden Gruppe, wie beispielsweise Amino-, Epoxy-, Mercapto- oder Acrylatgruppen, aufweist und c Werte von 0 bis 2 annimmt, d entweder 1 oder 2 und die Summe (c+d) nicht größer als 3 ist, und/oder deren Teilkondensate,
(m) 0,01 bis 3 Gew.-% mindestens einer die Umsetzung der Komponenten (i) bis (l) katalysierenden Verbindung,
(n) 5 bis 50 Gew.-% mindestens eines behandelten und/oder unbehandelten Füllstoffes sowie ggf.
(o) weitere bekannte Zusätze.

Als Verbindung (i) werden vorzugsweise silanol- und/oder alkoxyterminierte Polydiorganosiloxane eingesetzt, wobei als Organogruppen Methyl- und/oder Vinylgruppen besonders bevorzugt sind. Weitere Organoreste können sein: Alkyl-, Alkenyl-, Allyl-, Cycloalkyl, Aryl-, Alkylaryl-, Arylalkyl- oder halogenierte Kohlenwasserstoffreste, wie beispielsweise 1,1,1-Trichlorethyl-, 3-Chlor-n-propyl-, 3,3,3-Trifluor-n-propyl-, 2,2,2,2'2'2'-Hexafluor-iso-propyl- oder Chlorphenylreste.

Beispiele für den Vernetzer (k) sind eine oder mehrere siliciumorganische Verbindungen, die der durchschnittlichen Formel

RₘSiX₄₋ₘ (VI),

entsprechen, worin R unabhängig voneinander, substituierte und/oder unsubstituierte, gesättigte und/oder ungesättigte, einwertige Kohlenwasserstoffreste mit 1 bis 6 Kohlenstoffatomen und X eine hydrolysierbare Gruppe bedeuten sowie m höchstens den Wert 1,9 annimmt, und/oder deren Teilkondensate.

Beispiele für solche Verbindungen sind Tetrapropoxy-, -ethoxy-, -methoxysilane oder Diamidodialkylsilan.

Als Haftvermittler (l) sind beispielsweise Aminopropyltriethoxysilan und Glycidoxypropyltrimethoxysilan oder deren Kombinationen bekannt. Aber auch Silane mit mehreren Amino- oder weiteren Alkoxygruppen bzw. Silane mit anderen funktionellen Resten sind als Haftvermittler verwendbar.

Zur Umsetzung der Komponenten (i) bis (l) werden als Katalysator (m) üblicherweise organische Zinn- oder Titanverbindungen oder Amine eingesetzt.

Die Siliconkautschukmischung kann als Füllstoff (n) beispielsweise Calciumcarbonate, hochdisperse Kieselsäuren, Silicate, Metalloxide oder -hydroxide, Ruße, Sulfate oder Zirkonate enthalten.

Weitere Zusatzstoffe (o) können u. a. sein:
- Weichmacher, wie nichtreaktive Siliconöle oder organische Verbindungen
- Stabilisatoren
- Pigmente.

Auf Basis der Komponenten (i) bis (o) können Ein- oder Zweikomponenten-Siliconkautschukmischungen formuliert werden, wobei die Mischungsherstellung diskontinuierlich oder kontinuierlich nach bekannten Verfahren erfolgt. Zur Herstellung von Siliconkautschukmischungen, welche schnell haftende Vulkanisate mit einer hohen Heißwasserstabilität ergeben, sind diese bekannten Rezepturen jedoch nur ungenügend geeignet. Erst mit den erfindungsgemäßen RTV-2-Siliconkautschukmischungen, welche die Komponenten (a) und (b) und/oder (c) enthalten, sind qualitativ hochwertige Mischungen formulierbar.

Es war vollkommen überraschend, daß es durch Verwendung der Kombination von einem verzweigten Polysiloxan mit einem hydrolysierbaren Alkylsilan, welches mindestens einen Kohlenwasserstoffrest mit mehr als 3 Kohlenstoffatomen aufweist, gelingt, eine Kautschukmischung bereitzustellen, die schnell zu einem mechansch belastbarem Material aushärtet und hervorragend als Verklebungs- oder Dichtungsmaterial geeignet ist. Außerdem gewährleisten die erfindungsgemäßen Mischungen eine hohe Festigkeiten des Verbundes Siliconkautschuk/Glas auch bei Lagerung der Verklebung über längere Zeit in heißem Wasser.

### Ausführungsbeispiele

Alle Mengen sind in Gewichtsteilen (GT) angegeben. Viskositätsangaben beziehen sich auf 25 °C.

### Grundmischung I

- 70 GT: Polydiorganosiloxan mit Hydroxylendgruppen Viskosität 10.000 mPas
- 2 GT: Polydiorganosiloxan mit Hydroxylendgruppen Viskosität 100 mPas
- 30 GT: Polydiorganosiloxan mit Trimethylsilylendgruppen Viskosität 100 mPas
- 100 GT: stearinsäurebeschichtetes, gefälltes Calciumcarbonat

### Grundmischung II

- 90 GT: Polydiorganosiloxan mit Hydroxylendgruppen Viskosität 10.000 mPas
- 2 GT: Polydiorganosiloxan mit Hydroxylendgruppen Viskosität 100 mPas
- 10 GT: Polydiorganosiloxan mit Trimethylsilylendgruppen Viskosität 100 mPas
- 100 GT: stearinsäurebeschichtetes, gefälltes Calciumcarbonat

Nach Zugabe des entsprechenden Vernetzersystems zu den Mischungen I oder II wurden Kautschuk-Prüfkörper analog DIN 28340 hergestellt (Verklebung von 2 Glasstreifen).

Im Vernetzersystem steht Zinnverbindung für das Umsetzungsprodukt aus Dibutylzinndilaurat und Tetraethoxysilan, OCTEO für Octyltriethoxysilan und TPOS für Tetrapropoxysilan.

Die Prüfkörper wurden 7 Tage bei Raumtemperatur (50 % Luftfeuchtigkeit) und anschließend 14 Tage in 70 °C heißem Wasser gelagert (HWL). An den Prüfkörpern wurden der Spannungswert nach Dehnung der Prüfkörper um 25 % (Spannung 25%) und die Zugfestigkeit (ZF) ermittelt. Bei allen erfindungsgemäßen Beispielen wurden Kohäsionsrisse (Zerreißen des Siliconkautschukes) beobachtet. Beim Vergleichsbeispiel 4 kam es zum Adhäsionsriß (Trennung des Kautschuks vom Glas).

### Beispiele 1 bis 4 - Variation des Haftvermittlers

Das Vernetzersystem wurde erhalten durch Vermischen der Komponenten
A) - Umsetzungsprodukt von Aminopropyltriethoxysilan (AMEO) mit Glycidoxypropyltrimethoxysilan (GLYMO) im gewünschten Verhältnis bei 80 °C,
B) - Polysiloxan (Siliconharz aus MeSiO_{3/2}-Einheiten, Molgewicht ca. 9500 g/mol) gelöst in OCTEO, und
c) - Reaktionsprodukt von Dibutylzinndilaurat (DBTL) mit Tetraethoxysilan im Mol-Verhältnis 2:1 (Erhitzen der Mischung über eine Stunde bei 160 °C).

Das Vernetzersystem wurde in die Grundmischung I eingearbeitet.

Tabelle 1 enthält die genaue Vernetzerzusammensetzung sowie die Ergebnisse.

**Tabelle 1**

| | Beispiel 1 | Beispiel 2 | Beispiel 3 | Beispiel 4 Vergleich |
|---|---|---|---|---|
| Vernetzerbestandteile in Gew.-Teilen | | | | |
| TPOS | 4 | 4 | 4 | 4 |
| Zinnverbindung | 2 | 2 | 2 | 2 |
| AMEO | 12 | 9 | 4 | 7,5 |
| GLYMO | 12 | 15 | 6 | 7,5 |
| OCTEO | 28 | 28 | 28 | -- |
| Polysiloxan | 42 | 42 | 42 | -- |
| Zusatz zu Grundmischung I in Gew.-% | 10 | 10 | 8,6 | 2,1 |

| Kennwerte | | | | |
|---|---|---|---|---|
| Spannung 25% nach 24 Stunden in MPa | 0,55 | 0,46 | 0,23 | 0,50 |
| ZF nach 7 Tagen in MPa | 1,03 | 1,08 | 0,98 | 0,85 |
| ZF nach HWL in MPa | 0,74 | 0,84 | 0,83 | 0,20 |

Aus der Tabelle 1 ist ersichtlich, daß der Zusatz von OCTEO und Polysiloxan gegenüber einer herkömmlichen Mischung (Beispiel 4) sowohl die Heißwasserstabilität erhöht als auch, bei erhöhtem Haftvermittleranteil, die frühe mechanische Belastbarkeit der verklebten Einheit (Spannungswert 25% nach 24 Stunden >0,3 MPa) gewährleistet.

### Beispiele 5 bis 8 - Variation des Alkylalkoxysilans

Vernetzersystem analog Beispiel 1 bis 4, jedoch wurden statt OCTEO verschiedene Alkoxysilane (jeweils 28 Gew.-Teile) eingesetzt.

Tabelle 2 enthält die genaue Vernetzerzusammensetzung sowie die Ergebnisse.

**Tabelle 2**

| | Beispiel 5 Vergleich | Beispiel 6 | Beispiel 7 | Beispiel 8 |
|---|---|---|---|---|
| Vernetzerbestandteile in Gew.-Teilen | | | | |
| TPOS | 4 | 4 | 4 | 4 |
| Zinnverbindung | 2 | 2 | 2 | 2 |
| AMEO | 9 | 9 | 9 | 9 |
| GLYMO | 15 | 15 | 15 | 15 |
| Alkoxysilan | 28¹⁾ | 28²⁾ | 28³⁾ | 28⁴⁾ |
| Polysiloxan | 42 | 42 | 42 | 42 |
| Zusatz zu Grundmischung I in Gew.-% | 10 | 10 | 10 | 10 |

| Kennwerte | | | | |
|---|---|---|---|---|
| ZF nach 7 Tagen in MPa | 0,98 | 0,96 | 1,01 | 1,02 |
| ZF nach HWL in MPa | 0,29 | 0,64 | 0,75 | 0,85 |

| | | | | |
|---|---|---|---|---|
| 1) Tetraethoxysilan | | | | |
| 2) Propyltriethoxysilan | | | | |
| 3) Iso-butyltriethoxysilan | | | | |
| 4) Cyclohexenylethyltriethoxysilan | | | | |

Tabelle 2 zeigt den positiven Einfluß des Zusatzes von Polysiloxan und Alkylalkoxysilan mit größerem Alkylrest auf die Heißwasserstabilität.

### Beispiele 9 bis 11 - Variation der Harzeinarbeitung

Vernetzersystem analog Beispiel 1 bis 4, jedoch wurde das Polysiloxan (Siliconharz) hierbei nicht in das Vernetzersystem eingearbeitet sondern nach verschiedenen Technologien der Grundmischung II Zugesetzt. Der Vernetzer enthält somit kein Siliconharz. Als Alkylalkoxysilan wurde OCTEO verwendet.

Tabelle 3 enthält Angaben zur Harzeinarbeitung sowie die Ergebnisse.

**Tabelle 3**

| | Beispiel 9 | Beispiel 10 | Beispiel 11 | Beispiel 12 |
|---|---|---|---|---|
| Vernetzerbestandteile in Gew.-Teilen | | | | |
| TPOS | 4 | 4 | 4 | 4 |
| Zinnverbindung | 2 | 2 | 2 | 2 |
| AMEO | 9 | 9 | 9 | 9 |
| GLYMO | 15 | 15 | 15 | 15 |
| OCTEO | 28 | 28 | -- | 28 |
| Polysiloxan | -- | -- | -- | 42 |
| Zusatz zu Grundmischung II in Gew.-% | 5,8 | 5,8 | 3,0 | 10 |
| Polysiloxanharz | 42¹⁾ | 42²⁾ | 42³⁾ | --⁴⁾ |
| OCTEO | -- | -- | 28 | -- |
| Zusatz zu Grundmischung II in Gew.-% | 4,2 | 4,2 | 7,0 | -- |

| Kennwerte | | | | |
|---|---|---|---|---|
| ZF nach 7 Tagen in MPa | 0,95 | 0,93 | 0,99 | 0,99 |
| ZF nach HWL in MPa | 0,83 | 0,87 | 0,78 | 0,89 |

| | | | | |
|---|---|---|---|---|
| 1) Aufschmelzen des Polysiloxanes (Schmelzpunkt 80 °C) in der Grundmischung II | | | | |
| 2) Einarbeiten des Polysiloxans, gelöst in Toluol, in die Grundmischung, anschließend Entfernung des Lösemittels | | | | |
| 3) Einarbeiten des Polysiloxans, gelöst in OCTEO, in die Grundmischung, dafür kein OCTEO im Vernetzer | | | | |
| 4) Umsetzung von Polysiloxan mit OCTEO in Gegenwart der Zinnverbindung während 2 Stunden bei 160 °C, anschließend Vermischung mit den anderen Vernetzerbestandteilen | | | | |

### Beispiele 13 bis 16 - Variation des Polysiloxanes

Vernetzerherstellung analog Beispiel 1 bis 4, nur wurden verschiedene Polysiloxan-Typen eingesetzt. Die Vernetzerrezeptur entspricht Beispiel 2.

Tabelle 4 enthält die Ergebnisse.

**Tabelle 4**

| | Beispiel 13 | Beispiel 14 | Beispiel 15 | Beispiel 16 |
|---|---|---|---|---|
| Polysiloxan | | | | |
| Einheiten | T-funkt. | T-funkt. | DMQ-funkt. | DT-funkt. |
| Molgewicht | 9 500 | 1 000 | 1 000 | 8 000 |

| Vernetzer | | | | |
|---|---|---|---|---|
| Zusatz zu Grundmischung II in Gew.-% | 10 | 10 | 10 | 10 |

| Kennwerte | | | | |
|---|---|---|---|---|
| ZF nach 7 Tagen in MPa | 1,00 | 1,04 | 1,01 | 0,93 |
| ZF nach HWL in MPa | 0,93 | 0,90 | 0,85 | 0,82 |

Diese Beispiele dokumentieren die Wirksamkeit der Polysiloxane über ein extrem breites Spektrum ihrer Zusammensetzung.

### Beispiele 17 und 20

### Grundmischung III

- 120 GT: Polydiorganosiloxan mit Dimethoxymethylsilylendgruppen Viskosität 50 000 mPas
- 60 GT: Polydiorganosiloxan mit Trimethylsilylendgruppen Viskosität 1 000 mPas
- 10 GT: Methyltrimethoxysilan
- 5 GT: Titanchelat
- 20 GT: pyrogene Kieselsäure
- 350 GT: gefälltes Calciumcarbonat

### Grundmischung IV

- 100 GT: Polydiorganosiloxan mit Hydroxylendgruppen Viskosität 50 000 mPas
- 35 GT: Polydiorganosiloxan mit Trimethylsilylendgruppen Viskosität 1 000 mPas
- 15 GT: Methyltris(dimethylketoximo)silan
- 0,3 GT: Dibutylzinndilaurat
- 10 GT: pyrogene Kieselsäure
- 70 GT: gefälltes Calciumcarbonat

Die Aushärtung der Einkomponentensysteme erfolgte über 6 Wochen bei Raumtemperatur. Die Ergebnisse sind in Tabelle 5 dargestellt.

**Tabelle 5**

| | Beispiel 17 | Beispiel 18 | Beispiel 19 | Beispiel 20 |
|---|---|---|---|---|
| Zusammensetzung in Gew.-Teilen | | | | |
| AMEO | 9 | -- | 9 | -- |
| GLYMO | 15 | -- | 15 | -- |
| OCTEO | 28 | -- | 28 | -- |
| Polysiloxan analog Beispiele 1 bis 3 | 42 | -- | 42 | -- |
| Zusatz zu Grundmischung III in Gew.-% | 3 | -- | -- | -- |
| Zusatz zu Grundmischung IV in Gew.-% | -- | -- | 3 | -- |

| Kennwerte | | | | |
|---|---|---|---|---|
| ZF nach 6 Wochen in MPa | 0,25 | 0,23 | 0,30 | 0,29 |
| ZF nach HWL in MPa | 0,24 | 0,17 | 0,29 | 0,21 |

Die Ergebnisse zeigen, daß sich die erfindungsgemäßen Zusätze auch bei Einkomponentensystemen positiv auf die Heißwasserstabilität auswirken.

## Patentansprüche

1. Adhäsive RTV-Siliconkautschukmischungen auf der Basis von durch Kondensation vernetzenden Polydiorganosiloxanen, enthaltend
(a) mindestens eine siliciumorganische Verbindung der allgemeinen Formel
RₐR¹_{b}SiX_{4-(a+b)} (I),
worin R unabhängig voneinander, substituierte und/oder unsubstituierte, gesättigte und/oder ungesättigte, einwertige Kohlenwasserstoffreste mit 1 bis 10 Kohlenstoffatomen, R¹ unabhängig voneinander, substituierte und/oder unsubstituierte, gesättigte und/oder ungesättigte lineare, verzweigte und/oder cyclische Kohlenwasserstoffreste mit mindestens drei Kohlenstoffatomen darstellen, X eine hydrolysierbare Gruppe bedeutet, a Werte von 0 bis 2 und die Summe (a+b) Werte zwischen 1 und 3 annehmen, und/oder deren Teilkondensate und
(b) mindestens eine siliciumorganische Verbindung der allgemeinen Formel
(SiO_{4/2})ₓ(R³SiO_{3/2})_{y}(R³₂SiO_{2/2})_{z}(R³₃SiO_{1/2})_{w} (II),
worin R³ unabhängig voneinander R und/oder OR und/oder OH bedeutet und die Summe (x+y+z+w) Werte größer 2 annimmt, und/oder
(c) das durch Umsetzung von mindestens einer Verbindung der allgemeinen Formel (I) mit mindestens einer Verbindung der allgemeinen Formel (II) erhaltene Produkt.

2. RTV-Siliconkautschukmischungen gemäß Anspruch 1, dadurch gekennzeichnet, daß 0,1 Gew.-% bis 30 Gew.-% der Verbindung (a) und (b) und/oder (c), bezogen auf die Gesamtmischung, enthalten sind.

3. RTV-Siliconkautschukmischungen gemäß Anspruch 1, dadurch gekennzeichnet, daß in der siliciumorganischen Verbindung der allgemeinen Formel (I) R¹ Propyl-, Butyl-, Isobutyl-, Octyl- und/oder Cyclohexenylreste darstellt.

4. RTV-Siliconkautschukmischungen gemäß Anspruch 1, dadurch gekennzeichnet, daß die Verbindung der allgemeinen Formel (I) die Struktur R¹Si(OR⁴)₃ aufweist, wobei R⁴ Kohlenwasserstoffreste mit 1 bis 4 Kohlenstoffatomen darstellt.

5. RTV-Siliconkautschukmischungen gemäß Anspruch 1, dadurch gekennzeichnet, daß als siliciumorganische Verbindungen der allgemeinen Formel (II) nieder- bis hochmolekulare Kondensationsprodukte von Alkyltrialkoxysilanen mit einem C₁- bis C₄-Alkylrest verwendet werden.

6. RTV-Siliconkautschukmischungen gemäß Anspruch 1, dadurch gekennzeichnet, daß die siliciumorganische Verbindung der allgemeinen Formel (II) aus Einheiten der Struktur (R³₃SiO_{1/2}) und (SiO_{4/2}) besteht.

7. RTV-Siliconkautschukmischungen gemäß Anspruch 1, dadurch gekennzeichnet, daß die siliciumorganische Verbindung der allgemeinen Formel (II) aus Einheiten der Struktur (R³₃SiO_{1/2}), (SiO_{4/2}) und (R³₂SiO_{2/2}) besteht.
